# EUROPEAN PATENT SPECIFICATION

(11) **EP 3 748 986 B1**
(45) Date of publication and mention of the grant of the patent: **06.08.2025**
(21) Application number: 20178151.5
(22) Date of filing: 04.06.2020
(51) Int. Cl.: H04Q 9/00, G08C 25/00

(54) **WIRELESS DEVICE AND COMMUNICATION SYSTEM**
DRAHTLOSE VORRICHTUNG UND KOMMUNIKATIONSSYSTEM
DISPOSITIF SANS FIL ET SYSTÈME DE COMMUNICATION

(30) Priority: 05.06.2019 JP 2019104927
(43) Date of publication of application: 09.12.2020
(73) Proprietor: Panasonic Intellectual Property Management Co., Ltd., Osaka-shi, Osaka 540-6207 (JP)
(72) Inventor: WATANABE, Takashi, Osaka-shi, Osaka Nara 540-6207 (JP); OMOTO, Yukihiro, Osaka-shi, Osaka Nara 540-6207 (JP); KAMIMURA, Takanori, Osaka-shi, Osaka Nara 540-6207 (JP)
(74) Representative: SSM Sandmair

(56) References cited:
- EP-A2- 3 358 317
- WO-A1-2017/213815
- US-A1- 2010 188 263

## Description

### BACKGROUND

### 1. Technical Field

The present disclosure relates to a communication device that communicates with a host device, and a communication system including a center device.

### 2. Description of the Related Art

In utilities such as gas, electric power, and water, a wireless automatic meter reading system has been put into practical use, which automatically reads a meter reading value of a meter for measuring the usage amount by using wireless communication or the like.

Such wireless automatic meter reading is composed of a wireless terminal attached to the meter for receiving the meter reading value from the meter, a host terminal for transmitting the meter reading value obtained from the wireless terminal to a center system of a utility company, and the like. The wireless terminal may be built in the meter as a wireless unit.

There are various communication systems, such as a specified low-power wireless system that uses a license-free frequency band, and a system that uses cellular-based communication that a telecommunications carrier handling mobile phones, etc. secures a band and operates.

If the specified low-power wireless system is used, since it uses a license-free band, the cost for the communication channel is suppressed, but the labor required to construct and maintain the network has been a problem.

On the other hand, recently, telecommunications carriers have come to provide cellular systems suitable for sensor networks. In this case, although cost is required for the communication channel, network construction and maintenance are performed under certain conditions by the telecommunications carrier, which is one of the merits in constructing the sensor network.

However, a wireless terminal using cellular-based communication needs to be connected to a base station or the like, which tends to increase current consumption.

In particular, a wireless terminal for automatic meter reading related to gas or water often uses a battery as a power source, and it is becoming very important to suppress current consumption. Therefore, for example, as disclosed in Unexamined Japanese Patent Publication No. 2004-153695, there is a system in which depending on a communication environment, a terminal determines whether or not to transmit, if the environment is good, transmits data, and if it is not good, stores data, thus suppressing power consumption.

US 2010/0188263 A1 discloses a system and method for prioritized collection of meta readings and that a set of parameters such as transmission frequency or the length of a reporting window can be tuned.

WO 2017/213815 A1 discloses a system for RF transmission power adjustment in a wireless sensor is provided. The system includes a main control unit positioned within an environment. At least one sensor is positioned within the environment and constructed and arranged to monitor occurrences within the environment. The at least one sensor is in wireless communication with the main control unit. The at least one sensor sends signals to the main control unit indicative of the occurrences. The signals have communication parameters affected by an environmental condition of the environment. The main control unit regulates a RF transmission power of the at least one sensor based on at least one of an aggregate of communication parameters of the signal or the environmental condition.

### SUMMARY

However, the conventional method has a problem that the date and time when data can be sent cannot be specified and that the data cannot be sent unless the communication environment is improved. There are also problems that cannot be dealt with by the cellular communication.

That is, in the cellular-based communication, the communication situation is determined between the base station, which is a host device, and the wireless terminal, the transmission power between the base station and the wireless terminal and a number of retransmissions are changed in accordance with the communication situation to ensure the reliability of communication, and even if communication is possible, the current consumption increases, which does not lead to suppression of the current consumption.

Further, since the wireless terminal for automatic meter reading is installed together with the meter, it serves as a fixed station whose position is fixed. Therefore, once the communication environment at the installation location deteriorates, the situation often does not improve, and there is a limit to suppressing current consumption by the conventional method of sending data to the center system, after the communication environment becomes good.

Since the present disclosure changes the communication frequency and the amount of information to be communicated according to the communication situation between the wireless terminal and the host device such as a base station to suppress the current consumption, even in a case of using cellular-based communication, it becomes possible to operate while suppressing the current consumption in a communication using not a mobile station but a fixed station.

A wireless device of the present disclosure includes a communication unit that communicates with a host device, a controller that controls the communication unit, and a storage unit that records information obtained from a sensor. When information is transmitted to the host device via the communication unit, the controller changes at least of (i) a frequency of transmission and (ii) data amount of the transmission in accordance with a communication level obtained from the host device.

Further, the communication system of the present disclosure has a wireless device including a storage unit that stores information from a sensor and communication specifications with a host device, a communication unit for communicating with the host device, and a controller that controls the communication unit according to the communication specifications stored in the storage unit. Further, the communication system has the host device including a host communication unit for communicating with the wireless device, a determination unit that determines a communication level by determining the communication situation with the wireless device, and a communication interface unit that communicates with the center device. In addition, the communication system has the center device including a center communication unit that communicates with the host device and a communication specification data generator. Furthermore, the center device generates communication specification data for changing the communication specifications of the wireless device based on the communication level obtained via the center communication unit.

Since the wireless device of the present disclosure changes the communication frequency and the amount of information to be communicated according to the communication situation between the wireless device and the host device such as a base station to suppress the current consumption, even in a case of using cellular-based communication, it becomes possible to operate while suppressing current consumption.

### BRIEF DESCRIPTION OF THE DRAWINGS

FIG. 1 is a block diagram showing a configuration of a wireless device according to a first exemplary embodiment;
FIG. 2 is a flowchart illustrating a communication operation of the wireless device according to the first exemplary embodiment;
FIG. 3 is a block diagram showing a configuration of a wireless device according to a second exemplary embodiment;
FIG. 4 is a flowchart illustrating a communication operation of the wireless device according to the second exemplary embodiment;
FIG. 5 is a block diagram showing a configuration of a communication system according to a third exemplary embodiment;
FIG. 6 is a communication sequence diagram of the communication system according to the third exemplary embodiment; and
FIG. 7 is a communication sequence diagram showing another example of the communication system according to the third exemplary embodiment.

### DETAILED DESCRIPTION

Exemplary embodiments will now be described below in detail with reference to the drawings. However, descriptions in more detail than necessary may be omitted. For example, detailed descriptions of already well-known matters or duplicate descriptions of substantially identical configurations may be omitted.

Note that the attached drawings and the following description are provided for those skilled in the art to fully understand the present disclosure, and are not intended to limit the subject matter as described in the appended claims.

### (First exemplary embodiment)

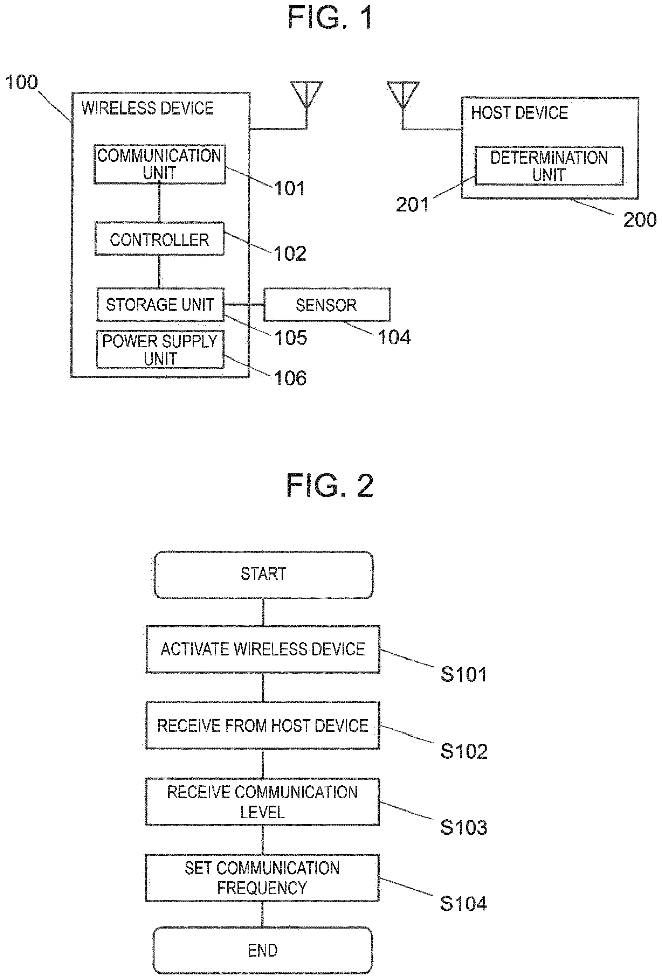

First exemplary embodiment will be described below with reference to FIGS. 1 and 2. FIG. 1 is a block diagram showing a wireless device according to the present disclosure and a host device that communicates with the wireless device.

Wireless device 100 includes communication unit 101, controller 102, storage unit 105, and power supply unit 106. Hereinafter, each block of FIG. 1 will be described first.

Communication unit 101 is controlled based on a communication protocol held by controller 102, performs wireless communication with host device 200, transmits data and the like recorded in storage unit 105 to host device 200, and receives instructions, etc. from host device 200.

In addition, communication unit 101 is configured by respective circuits for setting a transmission output, selecting a channel to be transmitted, setting a transmission rate for transmission, and performing modulation or the like when performing wireless communication.

Controller 102 holds information for controlling communication unit 101. The information for controlling communication unit 101 mentioned here is a communication protocol between wireless device 100 and host device 200. In this communication protocol, for example, as a transition of communication, from wireless device 100, at a predetermined timing, wireless device 100 is activated into a state capable of transmission, and the data of sensor 104 or the like stored in storage unit 105 is transmitted via communication unit 101. After that, there is a procedure for transitioning communication unit 101 to a reception state in order to receive a response from host device 200. In addition to this, controller 102 has a program and the like for controlling entire wireless device 100. Host device 200 has determination unit 201 that determines the communication level by determining the communication situation with wireless device 100, and the communication level determined by determination unit 201 is transmitted to wireless device 100. Controller 102, if the communication level obtained via communication unit 101 is smaller than a predetermined level, sets the frequency at which wireless device 100 transmits to host device 200 to be small, and if the communication level is larger than a predetermined level, sets the communication frequency to be large. Note that, the communication level is calculated by combining, depending on the network configuration, one or more indicators, such as the reference signal reception power, the reference signal reception quality, the reception signal code power, the transmission power, the reception interference power, and the reception signal strength indicator in the communication between host device 200 and wireless device 100.

Storage unit 105 stores data obtained from external sensor 104 connected to wireless device 100. Sensor 104 is, for example, a flow meter such as a gas meter or a water meter, and outputs an integrated value of flow rate or an instantaneous flow rate value.

Power supply unit 106 holds electric power to be supplied to each block in wireless device 100 and is composed of a battery.

Next, a flow for determining the communication frequency in controller 102 of wireless device 100 will be described using the flowchart for explaining the communication operation of wireless device 100 shown in FIG. 2.

Wireless device 100 is driven by power supply unit 106 composed of a battery and the like, and in order to save power as much as possible, communication unit 101 and the like save power when communication is unnecessary. Therefore, when starting the communication start flow of FIG. 2, first, wireless device 100 is activated (step S101). Then, communication with host device 200 is started in accordance with a predetermined communication protocol (step S102). After the communication is started, the data including the communication level is received from host device 200 (step S103). After that, controller 102 sets the communication frequency at which wireless device 100 transmits data to host device 200 in accordance with the communication level obtained by reception (step S104). The communication frequency is set in accordance with the communication level and the required battery life.

Table 1 shows three levels indicating the communication levels determined by the data received from host device 200, and one example of a number of retransmissions in accordance with the communication situation in one-time communication, the expected battery life, and the communication frequency set by comparison determination by controller 102.

**[Table 1]**

| Communication level | Number of retransmissions | Battery life at one-time transmission per day | Set communication frequency for battery life of 10 years |
|---|---|---|---|
| Level 1 | 1 | 10 years | Once a day |
| Level 2 | 2 | 5 years | Once every two days |
| Level 3 | 5 | 2 years | Once every 5 days |

In Table 1, regarding the communication level, level 1 indicates the best communication situation, and level 3 indicates the worst communication situation. In cellular communication, the number of retransmissions in one-time communication is set as a fixed value in accordance with the communication level determined by the communication situation, and as the communication situation worsens, the number of retransmissions increases and current consumption increases. Therefore, in a case of one-time transmission per day, the battery life becomes shorter as the communication situation becomes worse.

Therefore, controller 102 determines the communication level to set the communication frequency for achieving the required battery life. In the example shown in Table 1, in order to achieve a battery life of 10 years, the communication frequency is once a day when the communication level is level 1, once every two days when the communication level is level 2, and once every 5 days when the communication level is level 3. Therefore, for example, when the communication level is determined to be level 2, the communication frequency is set to once every two days.

However, if daily data is required and the communication frequency is once every two days, it goes without saying that measurement data for two days should be saved and data for two days should be transmitted with one-time communication. Table 1 is an example showing that the current consumption required for one-time communication varies depending on the communication situation, and a number of communication levels and the number of retransmissions for each level are determined as the specifications of the communication system. Furthermore, it is also possible to change the transmission power for each communication level instead of the number of retransmissions, or change both the number of retransmissions and the transmission power, and both are determined as the specifications of the communication system. The battery life and the set communication frequency are determined by the current consumption and the battery capacity.

Further, in the present exemplary embodiment, the communication level is obtained by receiving from host device 200, but it goes without saying that the communication level may be determined by wireless device 100 determining the communication situation.

Also, when the battery life for 5 years is enough, the communication frequency is once a day if the communication level is level 2, but, for example, in the case of level 1, the communication frequency is twice a day. If the communication situation is good, the responsiveness is improved by increasing the communication frequency, and thus, the communication frequency can be set in accordance with the communication situation and the required battery life. In particular, when communication is started based on a call origination from the wireless device, a command from host device 200 or a center device (not shown) connected to host device 200 and an instruction to the wireless device or a sensor such as a meter connected to the wireless device can be performed at an early stage, which is useful.

As described above, according to the present exemplary embodiment, since the communication frequency is changed to suppress the current consumption in accordance with the communication situation between wireless device 100 and host device 200 such as a base station, even when the cellular-based communication is used, it is possible to operate while suppressing the current consumption.

### (Second exemplary embodiment)

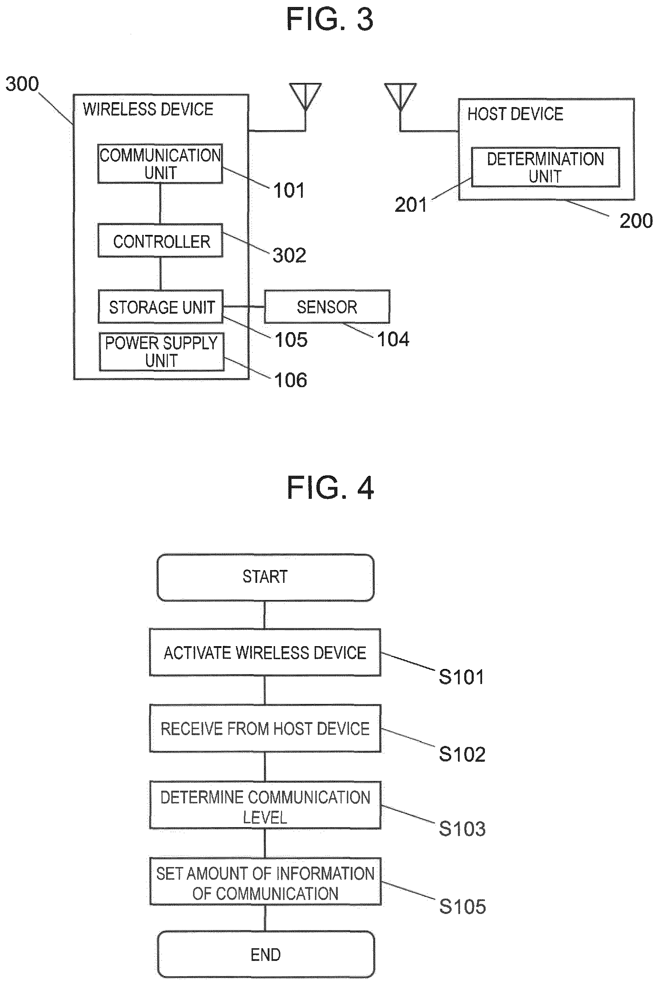

Next, a second exemplary embodiment will be described with reference to FIGS. 3 and 4. FIG. 3 is a block diagram showing a wireless device according to the present disclosure and a host device that communicates with the wireless device. The same constituent elements described in FIG. 1 are indicated by the same numbers. The difference from the first exemplary embodiment is that controller 302 sets the amount of information to be communicated in accordance with the communication level.

That is, in the present exemplary embodiment, if the communication level is smaller than a predetermined communication level, controller 302 sets an amount of information to be transmitted once by wireless device 300 to host device 200 to be small, and if the communication level is larger than a predetermined communication level, sets the amount of information to be transmitted once by wireless device 300 to host device 200 to be large.

Next, a flow for determining the amount of information of communication in controller 302 of wireless device 300 will be described using the flowchart for explaining the communication operation of wireless device 300 shown in FIG. 4.

When the communication start flow of FIG. 4 is started, first, wireless device 300 is activated (step S101). Then, communication with host device 200 is started in accordance with a predetermined communication protocol (step S102). After the communication is started, the data including the communication level is received from host device 200 (step S103). After that, controller 302 sets the amount of information that wireless device 300 transmits data to host device 200 in accordance with the communication level (step S105). The amount of information of communication is set in accordance with the communication level and the required battery life. Table 2 shows three levels indicating the communication levels, and one example of a number of retransmissions in accordance with the communication level, the expected battery life, and the amount of information per communication set by comparison determination by controller 302.

**[Table 2]**

| Communication level | Number of retransmissions | Battery life at transmission of 24 pieces of data once a day | Set amount of information for battery life of 10 years |
|---|---|---|---|
| Level 1 | 1 | 10 years | 24 pieces |
| Level 2 | 2 | 5 years | 12 pieces |
| Level 3 | 5 | 2 years | 4 pieces |

In Table 2, regarding the communication level, level 1 indicates the best communication situation, and level 3 indicates the worst communication situation. In cellular communication, the number of retransmissions in one-time communication is set as a fixed value in accordance with the communication level determined by the communication situation, and as the communication situation worsens, the number of retransmissions increases and current consumption increases. Therefore, in a case of one-time transmission per day, the battery life becomes shorter as the communication situation becomes worse.

Therefore, controller 302 sets the amount of information to be transmitted in one-time communication to achieve the required battery life by determining the communication level. In the example shown in Table 3, in order to achieve a battery life of 10 years, if the communication level is level 1, the amount of information is 24 pieces at a time (corresponding to a number of pieces of measured data for one day every one hour by sensor 104). If the communication level is level 2, the amount of information is 12 pieces at a time (corresponding to the number of pieces of measured data for one day every 2 hours by sensor 104). If the communication level is level 3, the amount of information is 4 pieces at a time (corresponding to the number of pieces of measured data for one day every 6 hours by sensor 104). Therefore, for example, when the communication level based on the communication situation data is determined to be level 2, the amount of information transmitted in one-time communication is set to 12 pieces.

Further, as a method of reducing the amount of information, a method of selecting necessary data in accordance with the communication level among the data obtained from sensor 104 may be used. That is, when sensor 104 is a gas meter and there is a gas flow rate, a gas pressure, and a gas temperature as hourly data, only the gas flow rate and the gas pressure are transmitted, or only the gas flow rate is transmitted. In this way, the amount of information may be reduced.

Table 2 shows an example, and a number of communication levels and the number of retransmissions are determined as the specifications of the communication system. Further, it is also possible to change the transmission power for each communication level instead of the number of retransmissions, change both the number of retransmissions and the transmission power, and further change the number of retransmissions and the transmission power in combination with the transmission rate and the modulation method, and both are determined as the specifications of the communication system. In addition, the battery life and the set amount of information are determined by the current consumption and the battery capacity.

In the present exemplary embodiment, host device 200 has been described as having determination unit 201 that determines the communication level, but wireless device 100 may determine the communication level by determining the communication situation.

As described above, according to the present exemplary embodiment, according to the communication situation between wireless device 100 and host device 200 such as a base station, the amount of information transmitted per communication is changed to suppress the current consumption. With this configuration, it is possible to operate while suppressing current consumption even when using cellular-based communication. Therefore, the configuration of the present exemplary embodiment is particularly effective when the amount per piece of data is large, the transmission data length is long, and the power consumption required for transmitting one piece of data is large.

In the first exemplary embodiment described above, the configuration that changes the communication frequency according to the communication level is described, and in the present exemplary embodiment, the configuration that changes the amount of information to be transmitted per communication in accordance with the communication level has been described. However, a configuration that appropriately selects from two of the communication frequency and the amount of information to be transmitted per communication in accordance with the communication level, or sets both at the same time may be used.

That is, when high-speed communication is possible, since the influence of power consumption on the amount of information is small, the configuration that changes the communication frequency described in the first exemplary embodiment can be adopted, and in the case of low-speed communication, since the influence of power consumption on the amount of information is large, the configuration that changes the amount of information transmitted per communication can be adopted.

Further, both the communication frequency and the amount of information transmitted per communication may be changed in accordance with the required amount of information and the required frequency. That is, as shown in Table 3, the communication frequency and the amount of information in one-time communication may be varied in accordance with the communication level. For example, in the case of level 3, 24 pieces of data can be transmitted once every 5 days, but when data once every 2 days is required, if 8 pieces of data, for example, can be transmitted while focusing on the required amount of information, one-time communication every two days can be achieved.

**[Table 3]**

| Communication level | Number of retransmissions | Set communication frequency and set amount of information for battery life of 10 years |
|---|---|---|
| Level 1 | 1 | 24 pieces once a day |
| Level 2 | 2 | 24 pieces once every 2 days to 12 pieces once a day |
| Level 3 | 5 | 24 pieces once every 5 days to 4 pieces once a day |

### (Third exemplary embodiment)

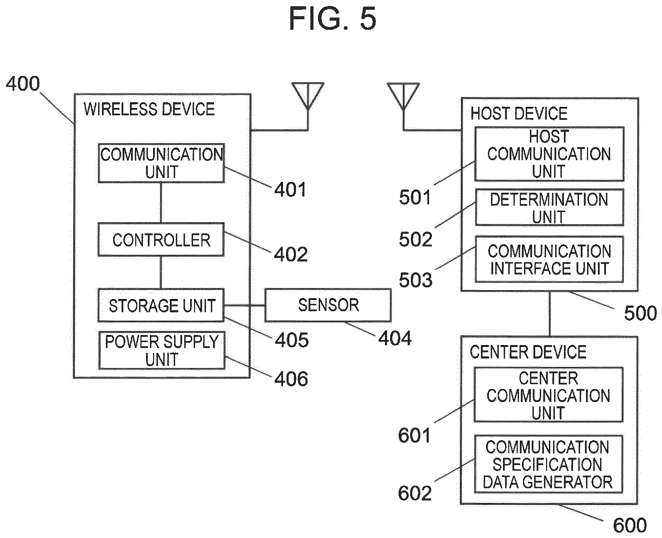

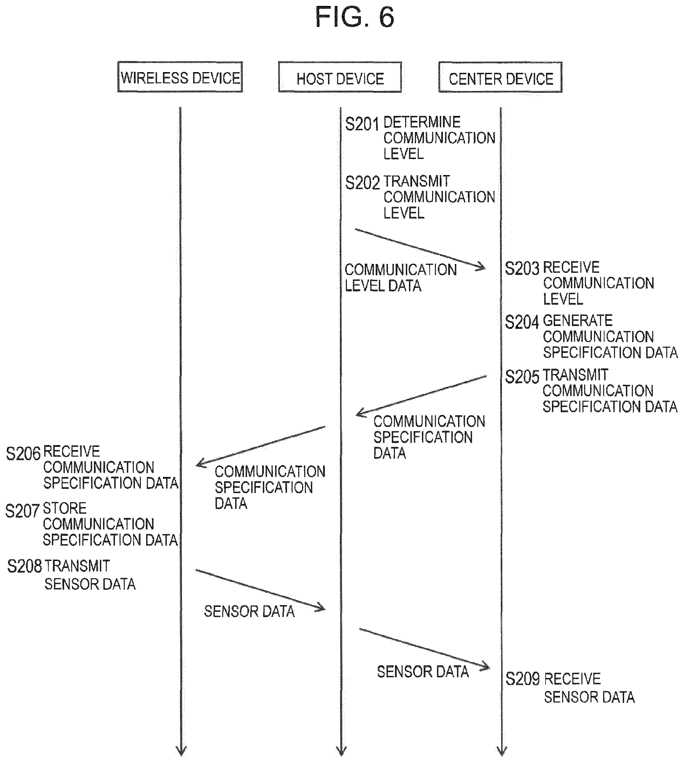

A third exemplary embodiment will be described below with reference to FIGS. 5 and 6. FIG. 5 is a block diagram showing a communication system in the present exemplary embodiment. The communication system according to the present exemplary embodiment includes the wireless device according to the first or second exemplary embodiment, a host device that communicates with the wireless device, and a center device.

Wireless device 400 includes communication unit 401, controller 402, storage unit 405, and power supply unit 406.

Communication unit 401 is controlled based on the communication protocol held by controller 402, performs wireless communication with host device 500, transmits the data and the like recorded in storage unit 405 to host device 500, and receives instructions and the like from host device 500. Further, communication unit 401 is configured by respective circuits for setting a transmission output, selecting a channel to be transmitted, setting a transmission rate for transmission, and performing modulation, or the like when performing wireless communication.

Controller 402 holds information for controlling communication unit 401. The information for controlling communication unit 401 mentioned here is a communication protocol between wireless device 400 and host device 500. In this communication protocol, for example, as a transition of communication, from wireless device 400, at a predetermined timing, wireless device 400 is activated into a state capable of transmission, and the data of external sensor 404 stored in storage unit 405 is transmitted via communication unit 401. After that, there is a procedure for transitioning communication unit 401 to the reception state in order to receive a response from host device 500. In addition to this, controller 402 holds a program and the like for controlling entire wireless device 400.

Storage unit 405 stores data obtained from external sensor 404 connected to wireless device 400. Sensor 404 is, for example, a flow meter such as a gas meter or a water meter, and outputs an integrated value of the flow rate or an instantaneous flow rate value.

Power supply unit 406 holds electric power to be supplied to each block in wireless device 400 and is composed of a battery.

Host device 500 includes host communication unit 501 that communicates with wireless device 400, determination unit 502 that determines the communication level from the communication situation with wireless device 400, and communication interface 503 that communicates with center device 600.

Center device 600 includes center communication unit 601 that communicates with host device 500, and communication specification data generator 602 that generates communication specification data capable of changing the communication specifications of wireless device 400 based on the communication level obtained from host device 500.

Host device 500 is a base station of a cellular communication network managed and operated by a telecommunications carrier, and center device 600 is operated by a business operator that supplies and services utilities such as gas and water. Host device 500 and center device 600 are connected by an internet network or a public line.

Next, the operation of the communication system in the present exemplary embodiment will be described using the communication sequence diagram shown in FIG. 6.

First, host device 500 determines the communication level based on the communication situation with wireless device 400 by determination unit 502, and transmits the communication level to center device 600 (step S201, step S202). Next, center device 600 determines the communication specifications of wireless device 400 based on the communication level received from host device 500, and generates communication specification data (step S203, step S204). This communication specifications define the communication frequency in accordance with the communication level shown in Table 1, the amount of information in accordance with the communication level shown in Table 2, the transmission power in accordance with the communication level, or the like, and are determined based on the required battery life.

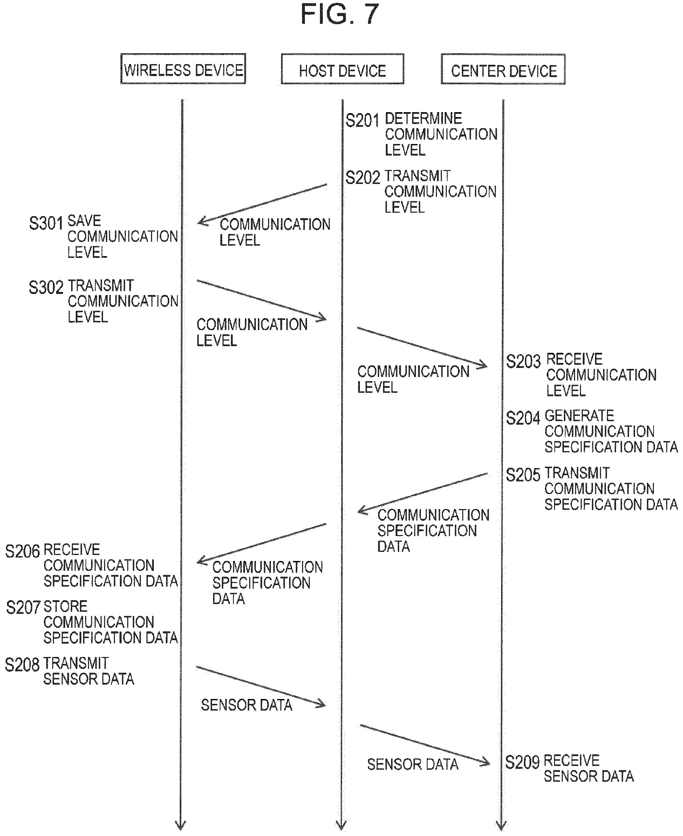

Then, the communication specifications are transmitted as communication specification data to wireless device 400 via host device 500 (step S205). Wireless device 400 stores the received communication specification data in storage unit 405 (step S206, step S207), controller 402 controls communication unit 401 based on the communication specifications stored in storage unit 405, transmits the sensor data or the like obtained by sensor 404 to center device 600 via host device 500 (step S208), and center device 600 receives the sensor data (step S209). In the present exemplary embodiment, the configuration has been described in which center device 600 directly receives the communication level determined by determination unit 502 of host device 500 from host device 500 (step S203), but as shown in FIG. 7, wireless device 400 may receive the communication level from host device 500 and save the communication level in storage unit 405 (step S301), and then wireless device 400 may transmit the communication level alone or together with the data of sensor 404 to center device 600 via host device 500 (step S302). Alternatively, the transmission may be performed based on a communication level request from center device 600 to wireless device 400.

As described above, according to the present exemplary embodiment, since center device 600 creates communication specifications in accordance with the communication situation between wireless device 400 and host device 500 such as a base station, and wireless device 400 transmits data based on this communication specifications, it becomes possible to operate while suppressing current consumption even when using cellular-based communication. In this case, since the communication specifications of wireless device 400 can be determined by center device 600, wireless device 400 does not require the function of changing the communication frequency and the amount of information in accordance with the communication level as in the first exemplary embodiment and the second exemplary embodiment. Therefore, an existing wireless device can be used.

Note that, the present exemplary embodiment has been described with the configuration in which host device 500 has determination unit 502 that determines the communication level, but it goes without saying that the present exemplary embodiment can be achieved with the configuration in which wireless device 400 determines the communication level by determining the communication situation, and the communication level is transmitted to center device 600 via host device 500.

As described above, the wireless device in the first aspect includes a communication unit that communicates with a host device, a controller that controls the communication unit, and a storage unit that records information obtained from a sensor, in which when the wireless device transmits the information to the host device via the communication unit, the controller changes at least of (i) a frequency of the transmission and (ii) data amount of the transmissionin accordance with a communication level obtained from the host device.

With this configuration, since the controller changes the frequency of the transmission and data amount of the transmission in accordance with the communication situation between the wireless device and the host device such as the base station to suppress the current consumption, it becomes possible to operate while suppressing current consumption even when using cellular-based communication.

The wireless device in the second aspect, particularly in the first disclosure, when the controller determines that the communication level with the host device is higher than a predetermined level, the controller may increase the frequency of the transmission.

With this configuration, when the communication situation is good, it is possible to improve the responsiveness by increasing the communication frequency while ensuring the required battery life.

The wireless device according to the third aspect, particularly in the first disclosure, when the controller determines that the communication level with the host device is lower than a predetermined level, the controller may reduce the frequency of the trannsmission.

With this configuration, when the communication situation is not good, it is possible to suppress the current consumption and ensure the required battery life.

The wireless device according to the fourth aspect, particularly in the first disclosure, when the controller determines that the communication level with the host device is higher than a predetermined level, the controller may set the data amount of the transmission to be larger than the predetermined amount.

The wireless device according to the fifth aspect, particularly in the first disclosure, when the controller determines that the communication level with the host device is lower than a predetermined level, the controller may set data amount of the transmission to be smaller than the predetermined amount.

The communication system according to the sixth as has a wireless device including a storage unit that stores information from a sensor and communication specifications with a host device, a communication unit for communicating with the host device, and a controller that controls the communication unit in accordance with the communication specifications stored in the storage unit. Further, the communication system has the host device including a host communication unit for communicating with the wireless device, a determination unit that determines a communication level by determining the communication situation with the wireless device, and a communication interface unit that communicates with the center device. In addition, the communication system has the center device including a center communication unit that communicates with the host device and a communication specification data generator. Furthermore, the center device generates communication specification data for changing the communication specifications of the wireless device based on the communication level obtained via the center communication unit.

In the communication system according to the seventh aspect, particularly in the sixth disclosure, when the determination unit of the host device determines that the communication level is higher than a predetermined level, the communication specification data generator of the center device may generate the communication specification data that is set so as to increase the communication frequency of the wireless device, and transmit the communication specification data to the wireless device via the host device.

In the communication system according to the eighth aspect, particularly in the sixth disclosure, when the determination unit of the host determines that the communication level is lower than a predetermined level, the communication specification data generator of the center device may generate the communication specification data that is set so as to reduce the communication frequency of the wireless device, and transmit the communication specification data to the wireless device via the host device.

In the communication system according to the ninth aspect, particularly in the sixth disclosure, when the determination unit of the host determines that the communication level is higher than a predetermined level, the communication specification data generator of the center device may generate the communication specification data that is set so as to increase a data amount of the information to be transmitted from the wireless device, and transmit the communication specification data to the wireless device via the host device.

In the communication system according to the tenth disclosure, particularly in the sixth disclosure, when the determination unit of the host device determines that the communication level is lower than a predetermined level, the communication specification data generator of the center device may generate the communication specification data that is set so as to reduce a data amount of information of the information to be transmitted from the wireless device, and transmit the communication specification data to the wireless device via the host device.

As described above, since the wireless device according to the present aspect changes the communication frequency and the amount of information to be communicated in accordance with the communication situation between the wireless device and the host device such as a base station to suppress the current consumption, it becomes possible to operate while suppressing current consumption even when using cellular-based communication, so that the wireless device according to the present disclosure can be applied to a wireless device using a battery as a power source.

## Claims

1. A wireless device (100) comprising:
a communication unit (101) configured to communicate with a host device (200);
a controller (102) configured to control the communication unit (101); and
a storage unit (105) configured to record information obtained from a sensor,
**characterized in that**
the wireless device (100) is driven by a power supply unit (106) composed of a battery,
wherein when the wireless device (100) transmits the information to the host device (200) via the communication unit (101),
the controller (102) determines a communication level obtained from the host device (200) in comparison with a predetermined level, and
based on the determination of the communication level and required battery life, the controller (102) changes at least one of
(i) a frequency of the transmission or
(ii) data amount of the transmission,
wherein the controller is configured to determine the communication level by combining, depending on the network configuration, one or more indicators including reference signals reception power, the reference signal reception quality, the reception signal code power, the transmission power, the reception interference power, and the reception signal strength indicator in the communication between the host device (200) and wireless device (100).

2. The wireless device according to claim 1, wherein the controller is configured to, when the controller determines that the communication level is higher than a predetermined level, increase the frequency of the transmission.

3. The wireless device according to claim 1, wherein the controller is configured to, when the controller determines that the communication level is lower than a predetermined level, reduce the frequency of the transmission.

4. The wireless device according to claim 1, wherein the controller is configured to, when the controller determines that the communication level is higher than a predetermined level, set the data amount of the transmission to be larger than a predetermined amount.

5. The wireless device according to claim 1, wherein the controller is configured to, when the controller determines that the communication level is lower than a predetermined level, set data amount of the transmission to be smaller than a predetermined amount.

6. A communication system comprising:
a wireless device (400) including
a storage unit (405) that stores information from a sensor (404) and communication specifications with a host device (500),
a communication unit (401) for communicating with the host device, and
a controller (402) that is configured to control the communication unit (401) in accordance with the communication specifications stored in the storage unit (405);
the host device (500) including
a host communication unit (501) for communicating with the wireless device,
a determination unit (502) configured to determine a communication level by determining a communication situation with the wireless device (400), and
a communication interface unit (503) configured to communicate with a center device (600); and
the center device (600) including
a center communication unit (601) that is configured to communicate with the host device, and
a communication specification data generator (602),
wherein
the wireless device (100) is driven by a power supply unit (106) composed of a battery,
the host device (500) is configured to determine the communication level based on the communication status with the wireless device (400) by the determination unit (502) and transmit the communication level to the center device (600),
the center device (600) is configured to generate communication specification data for changing the communication specifications of the wireless device (400) based on the communication level obtained via the center communication unit (601),
the wireless device (400) is configured to receive the communication specification data from the center device (600) via the host device (500), and
the wireless device (400) is configured to change at least one of a frequency of the transmission, a data amount of the transmission, and a transmission power based on the communication specification data and required battery life, and
wherein the host device (500) is configured to determine the communication level by combining, depending on the network configuration, one or more indicators including reference signals reception power, the reference signal reception quality, the reception signal code power, the transmission power, the reception interference power, and the reception signal strength indicator in the communication between the host device (200) and wireless device (100).

7. The communication system according to claim 6, wherein the communication specification data generator of the center device is configured to, when the determination unit of the host device determines that the communication level is higher than a predetermined level, generate the communication specification data set so as to increase a communication frequency of the wireless device, and to transmit the communication specification data to the wireless device via the host device.

8. The communication system according to claim 6, wherein the communication specification data generator of the center device is configured to, when the determination unit of the host determines that the communication level is lower than a predetermined level, generate the communication specification data set so as to reduce a communication frequency of the wireless device and to transmit the communication specification data to the wireless device via the host device.

9. The communication system according to claim 6, wherein the communication specification data generator of the center device is configured to, when the determination unit of the host determines that the communication level is higher than a predetermined level, generate the communication specification data set so as to increase a data amount of the information transmitted from the wireless device, and to transmit the communication specification data to the wireless device via the host device.

10. The communication system according to claim 6, wherein the communication specification data generator of the center device is configured to generate, when the determination unit of the host device determines that the communication level is lower than a predetermined level, the communication specification data set so as to reduce a data amount of the information transmitted from the wireless device, and to transmit the communication specification data to the wireless device via the host device.

## Patentansprüche

1. Funkendes Gerät (100), umfassend:
eine Kommunikationseinheit (101), die für die Kommunikation mit einem Host-Gerät (200) konfiguriert ist;
eine Steuereinheit (102), die zur Steuereinheit der Kommunikationseinheit (101) konfiguriert ist; und
eine Speichereinheit (105), die so konfiguriert ist, dass sie von einem Sensor erhaltene Informationen aufzeichnet,
**dadurch gekennzeichnet, dass**
das funkende Gerät (100) mit einer aus einer Batterie bestehenden Stromversorgungseinheit (106) betrieben wird,
wobei, wenn das funkende Gerät (100) die Informationen über die Kommunikationseinheit (101) an das Host-Gerät (200) sendet,
die Steuereinheit (102) einen von der Host-Vorrichtung (200) erhaltenen Kommunikationspegel im Vergleich zu einem vorbestimmten Pegel bestimmt, und
basierend auf der Bestimmung des Kommunikationspegels und der erforderlichen Batterielebensdauer die Steuereinheit (102) mindestens eines der folgenden Elemente ändert:
(i) eine Frequenz der Übertragung oder
(ii) Datenmenge der Übertragung,
wobei die Steuereinheit so konfiguriert ist, dass sie den Kommunikationspegel bestimmt, indem sie in Abhängigkeit von der Netzwerkkonfiguration einen oder mehrere Indikatoren, einschließlich der Referenzsignal-Empfangsleistung, der Referenzsignal-Empfangsqualität, der Empfangssignal-Codeleistung, der Sendeleistung, der Empfangsstörungsleistung und des Empfangssignalstärke-Indikators in der Kommunikation zwischen dem Host-Gerät (200) und dem funkenden Gerät (100) kombiniert.

2. Funkendes Gerät nach Anspruch 1, wobei die Steuereinheit so konfiguriert ist, dass sie, wenn sie feststellt, dass der Kommunikationspegel höher als ein vorbestimmter Pegel ist, die Frequenz der Übertragung erhöht.

3. Funkendes Gerät nach Anspruch 1, wobei die Steuereinheit so konfiguriert ist, dass sie die Frequenz der Übertragung reduziert, wenn sie feststellt, dass der Kommunikationspegel niedriger als ein vorbestimmter Pegel ist.

4. Funkendes Gerät nach Anspruch 1, wobei die Steuereinheit so konfiguriert ist, dass sie die Datenmenge der Übertragung so einstellt, dass sie größer als eine vorbestimmte Menge ist, wenn sie feststellt, dass der Kommunikationspegel höher als ein vorbestimmter Pegel ist.

5. Funkendes Gerät nach Anspruch 1, wobei die Steuereinheit so konfiguriert ist, dass sie die Datenmenge der Übertragung so einstellt, dass sie kleiner als eine vorbestimmte Menge ist, wenn sie feststellt, dass der Kommunikationspegel niedriger als ein vorbestimmter Pegel ist.

6. Kommunikationssystem, umfassend:
eine funkende Vorrichtung (400) mit
eine Speichereinheit (405), die Informationen von einem Sensor (404) und Kommunikationsspezifikationen mit einem Host-Gerät (500) speichert,
eine Kommunikationseinheit (401) zur Kommunikation mit dem Host-Gerät, und
eine Steuereinheit (402), der so konfiguriert ist, dass sie die Kommunikationseinheit (401) gemäß den in der Speichereinheit (405) gespeicherten Kommunikationsspezifikationen steuert;
das Host-Gerät (500) enthält
eine Host-Kommunikationseinheit (501) zur Kommunikation mit dem funkenden Gerät,
eine Bestimmungseinheit (502), die so konfiguriert ist, dass sie einen Kommunikationspegel durch Bestimmen einer Kommunikationssituation mit der funkenden Vorrichtung (400) bestimmt, und
eine Kommunikationsschnittstelleneinheit (503), die so konfiguriert ist, dass sie mit einer zentralen Vorrichtung (600) kommuniziert; und
die zentrale Vorrichtung (600) umfasst
eine zentrale Kommunikationseinheit (601), die so konfiguriert ist, dass sie mit dem Hostgerät kommuniziert, und
einen Generator für Kommunikationsspezifikationsdaten (602),
wobei
die funkende Vorrichtung (100) mit einer aus einer Batterie bestehenden Stromversorgungseinheit (106) betrieben wird,
die Host-Vorrichtung (500) so konfiguriert ist, dass sie den Kommunikationspegel basierend auf dem Kommunikationsstatus mit der funkenden Vorrichtung (400) durch die Bestimmungseinheit (502) bestimmt und den Kommunikationspegel an die Zentralvorrichtung (600) übermittelt,
die Zentralvorrichtung (600) so konfiguriert ist, dass sie Kommunikationsspezifikationsdaten zum Ändern der Kommunikationsspezifikationen der funkenden Vorrichtung (400) basierend auf dem über die Zentralkommunikationseinheit (601) erhaltenen Kommunikationspegel erzeugt,
die funkende Vorrichtung (400) so konfiguriert ist, dass sie die Kommunikationsspezifikationsdaten von der Zentralvorrichtung (600) über die Hostvorrichtung (500) empfängt, und
die funkende Vorrichtung (400) so konfiguriert ist, dass sie mindestens eine Frequenz der Übertragung, eine Datenmenge der Übertragung und eine Sendeleistung auf der Grundlage der Kommunikationsspezifikationsdaten und der erforderlichen Batterielebensdauer ändert, und
wobei die Host-Vorrichtung (500) so konfiguriert ist, dass sie den Kommunikationspegel bestimmt, indem sie in Abhängigkeit von der Netzwerkkonfiguration einen oder mehrere Indikatoren, einschließlich der Referenzsignal-Empfangsleistung, der Referenzsignal-Empfangsqualität, der Empfangssignal-Codeleistung, der Sendeleistung, der Empfangsstörungsleistung und des Empfangssignalstärke-Indikators in der Kommunikation zwischen der Host-Vorrichtung (200) und der funkenden Vorrichtung (100) kombiniert.

7. Kommunikationssystem nach Anspruch 6, wobei der Kommunikationsspezifikationsdatengenerator der zentralen Vorrichtung so konfiguriert ist, dass er den Kommunikationsspezifikationsdatensatz erzeugt, um eine Kommunikationsfrequenz des drahtlosen Geräts zu erhöhen, und die Kommunikationsspezifikationsdaten über das Hostgerät an das drahtlose Gerät überträgt, wenn die Bestimmungseinheit des Hostgeräts bestimmt, dass der Kommunikationspegel höher als ein vorbestimmter Pegel ist.

8. Kommunikationssystem nach Anspruch 6, wobei der Kommunikationsspezifikationsdatengenerator des Zentralgeräts so konfiguriert ist, dass er den Kommunikationsspezifikationsdatensatz erzeugt, um eine Kommunikationsfrequenz des drahtlosen Geräts zu reduzieren und die Kommunikationsspezifikationsdaten über das Host-Gerät an das drahtlose Gerät zu übertragen, wenn die Bestimmungseinheit des Hosts feststellt, dass der Kommunikationspegel niedriger als ein vorbestimmter Pegel ist.

9. Kommunikationssystem nach Anspruch 6, wobei der Kommunikationsspezifikationsdatengenerator des Zentralgeräts so konfiguriert ist, dass er den Kommunikationsspezifikationsdatensatz erzeugt, um eine Datenmenge der von dem drahtlosen Gerät übertragenen Informationen zu erhöhen, und die Kommunikationsspezifikationsdaten über das Host-Gerät an das drahtlose Gerät überträgt, wenn die Bestimmungseinheit des Hosts bestimmt, dass der Kommunikationspegel höher als ein vorbestimmter Pegel ist.

10. Kommunikationssystem nach Anspruch 6, wobei der Kommunikationsspezifikationsdatengenerator der Zentralvorrichtung so konfiguriert ist, dass er den Kommunikationsspezifikationsdatensatz erzeugt, um eine Datenmenge der von der drahtlosen Vorrichtung übertragenen Informationen zu reduzieren, und die Kommunikationsspezifikationsdaten über die Hostvorrichtung an die drahtlose Vorrichtung überträgt, wenn die Bestimmungseinheit der Hostvorrichtung feststellt, dass der Kommunikationspegel niedriger als ein vorbestimmter Pegel ist.

## Revendications

1. Dispositif sans fil (100) comprenant :
une unité de communication (101) configurée pour communiquer avec un dispositif hôte (200) ;
un dispositif de commande (102) configuré pour commander l'unité de communication (101); et
une unité de stockage (105) configurée pour enregistrer des informations obtenues à partir d'un capteur,
**caractérisé en ce que**
le dispositif sans fil (100) est piloté par une unité d'alimentation électrique (106) composée d'une batterie,
dans lequel lorsque le dispositif sans fil (100) transmet les informations au dispositif hôte (200) par l'intermédiaire de l'unité de communication (101),
le dispositif de commande (102) détermine un niveau de communication obtenu à partir du dispositif hôte (200) en comparaison avec un niveau prédéterminé, et
sur la base de la détermination du niveau de communication et de la durée de vie de batterie requise, le dispositif de commande (102) modifie au moins l'une parmi
(i) une fréquence de la transmission ou
(ii) une quantité de données de la transmission,
dans lequel le dispositif de commande est configuré pour déterminer le niveau de communication en combinant, en fonction de la configuration de réseau, un ou plusieurs indicateurs incluant une puissance de réception de signaux de référence, la qualité de réception de signal de référence, la puissance de code de signal de réception, la puissance de transmission, la puissance d'interférence de réception, et l'indicateur d'intensité de signal de réception dans la communication entre le dispositif hôte (200) et le dispositif sans fil (100).

2. Dispositif sans fil selon la revendication 1, dans lequel le dispositif de commande est configuré pour, lorsque le dispositif de commande détermine que le niveau de communication est supérieur à un niveau prédéterminé, augmenter la fréquence de la transmission.

3. Dispositif sans fil selon la revendication 1, dans lequel le dispositif de commande est configuré pour, lorsque le dispositif de commande détermine que le niveau de communication est inférieur à un niveau prédéterminé, réduire la fréquence de la transmission.

4. Dispositif sans fil selon la revendication 1, dans lequel le dispositif de commande est configuré pour, lorsque le dispositif de commande détermine que le niveau de communication est supérieur à un niveau prédéterminé, définir la quantité de données de la transmission pour qu'elle soit plus grande qu'une quantité prédéterminée.

5. Dispositif sans fil selon la revendication 1, dans lequel le dispositif de commande est configuré pour, lorsque le dispositif de commande détermine que le niveau de communication est inférieur à un niveau prédéterminé, définir la quantité de données de la transmission pour qu'elle soit plus petite qu'une quantité prédéterminée.

6. Système de communication comprenant :
un dispositif sans fil (400) incluant
une unité de stockage (405) qui stocke des informations à partir d'un capteur (404) et des spécifications de communication avec un dispositif hôte (500),
une unité de communication (401) pour communiquer avec le dispositif hôte, et
un dispositif de commande (402) qui est configuré pour commander l'unité de communication (401) en conformité avec les spécifications de communication stockées dans l'unité de stockage (405) ;
le dispositif hôte (500) incluant
une unité de communication hôte (501) pour communiquer avec le dispositif sans fil,
une unité de détermination (502) configurée pour déterminer un niveau de communication en déterminant une situation de communication avec le dispositif sans fil (400), et
une unité d'interface de communication (503) configurée pour communiquer avec un dispositif central (600) ; et
le dispositif central (600) incluant
une unité de communication centrale (601) qui est configurée pour communiquer avec le dispositif hôte, et
un générateur de données de spécification de communication (602),
dans lequel
le dispositif sans fil (100) est piloté par une unité d'alimentation électrique (106) composée d'une batterie,
le dispositif hôte (500) est configuré pour déterminer le niveau de communication sur la base du statut de communication avec le dispositif sans fil (400) par l'unité de détermination (502) et transmettre le niveau de communication au dispositif central (600),
le dispositif central (600) est configuré pour générer des données de spécification de communication afin de modifier les spécifications de communication du dispositif sans fil (400) sur la base du niveau de communication obtenu par l'intermédiaire de l'unité de communication centrale (601),
le dispositif sans fil (400) est configuré pour recevoir les données de spécification de communication à partir du dispositif central (600) par l'intermédiaire du dispositif hôte (500), et
le dispositif sans fil (400) est configuré pour modifier au moins l'une parmi une fréquence de la transmission, une quantité de données de la transmission, et une puissance de transmission sur la base des données de spécification de communication et de la durée de vie de batterie requise, et
dans lequel le dispositif hôte (500) est configuré pour déterminer le niveau de communication en combinant, en fonction de la configuration de réseau, un ou plusieurs indicateurs incluant une puissance de réception de signaux de référence, la qualité de réception de signal de référence, la puissance de code de signal de réception, la puissance de transmission, la puissance d'interférence de réception, et l'indicateur d'intensité de signal de réception dans la communication entre le dispositif hôte (200) et le dispositif sans fil (100).

7. Système de communication selon la revendication 6, dans lequel le générateur de données de spécification de communication du dispositif central est configuré pour, lorsque l'unité de détermination du dispositif hôte détermine que le niveau de communication est supérieur à un niveau prédéterminé, générer l'ensemble de données de spécification de communication de manière à augmenter une fréquence de communication du dispositif sans fil, et pour transmettre les données de spécification de communication au dispositif sans fil par l'intermédiaire du dispositif hôte.

8. Système de communication selon la revendication 6, dans lequel le générateur de données de spécification de communication du dispositif central est configuré pour, lorsque l'unité de détermination de l'hôte détermine que le niveau de communication est inférieur à un niveau prédéterminé, générer l'ensemble de données de spécification de communication de manière à réduire une fréquence de communication du dispositif sans fil et pour transmettre les données de spécification de communication au dispositif sans fil par l'intermédiaire du dispositif hôte.

9. Système de communication selon la revendication 6, dans lequel le générateur de données de spécification de communication du dispositif central est configuré pour, lorsque l'unité de détermination de l'hôte détermine que le niveau de communication est supérieur à un niveau prédéterminé, générer l'ensemble de données de spécification de communication de manière à augmenter une quantité de données des informations transmises à partir du dispositif sans fil, et pour transmettre les données de spécification de communication au dispositif sans fil par l'intermédiaire du dispositif hôte.

10. Système de communication selon la revendication 6, dans lequel le générateur de données de spécification de communication du dispositif central est configuré pour générer, lorsque l'unité de détermination du dispositif hôte détermine que le niveau de communication est inférieur à un niveau prédéterminé, l'ensemble de données de spécification de communication de manière à réduire une quantité de données des informations transmises à partir du dispositif sans fil, et pour transmettre les données de spécification de communication au dispositif sans fil par l'intermédiaire du dispositif hôte.
